# EUROPEAN PATENT APPLICATION

(11) **EP 3 564 818 A1**
(43) Date of publication of application: **06.11.2019**
(21) Application number: 16925149.3
(22) Date of filing: 29.12.2016
(51) Int. Cl.: G06F 11/32

(54) **SMART TERMINAL AND CONTROL METHOD THEREFOR**

(71) Applicant: Shenzhen Royole Technologies Co., Ltd., Shenzhen, Guangdong 518052 (CN)
(72) Inventor: ZHANG, Xuan, Shenzhen Guangdong 518052 (CN)
(74) Representative: Hamer, Christopher K.
(86) International application number: PCT/CN2016/112979
(87) International publication number: WO 2018/119861

(57) **Abstract**

An intelligent terminal is provided. The intelligent terminal includes a flexible screen, a screen switching assembly, and a controller. The controller is configured to control retracting or expanding of the flexible screen with the screen switching assembly in response to information received by the intelligent terminal, so as to realize a prompting function for information received by the intelligent terminal. The present disclosure also provides a method for controlling the intelligent terminal.

## Description

### TECHNICAL FIELD

This disclosure relates to the technical field of intelligent terminals, and more particularly to an intelligent terminal and a method for controlling the intelligent terminal.

### BACKGROUND

Traditional information feedback of a terminal includes vibration feedback, and when a message is pushed, the terminal can prompt through vibration. However, the existing vibration prompting can only last for a short time. If a user misses the current vibration prompting, the user would not know whether a message is pushed, and the user's experience is not intuitive. For some occasions where the user is unable to or inconvenient to observe a screen of the terminal, it is liable to cause trouble for the user.

### SUMMARY

Embodiments of the present disclosure provide an intelligent terminal, whereby information pushed can be perceived intuitively.

An intelligent terminal is provided. The intelligent terminal includes a deformable element capable of deforming and a controller. The controller is configured to control the deformable element to deform for prompting in response to information received by the intelligent terminal.

A method for controlling an intelligent terminal is further provided, and the method includes the following. Information is received by the intelligent terminal, and a deformable element of the intelligent terminal is controlled to deform according to the information received by the intelligent terminal.

According to the intelligent terminal of the present disclosure, the controller is configured to control retracting or expanding of a flexible screen with a screen switching assembly according to the information received by a system, whereby a prompting function can be provided instead of a vibration prompting mode. In addition, a user can perceive a change of a screen of a watch via vision or tactility at any time, such that the number of unread information can be intuitively known, thereby facilitating the user's use.

### BRIEF DESCRIPTION OF THE DRAWINGS

To describe technical solutions in the embodiments of the present disclosure more clearly, the following briefly introduces the accompanying drawings required for describing the embodiments. Apparently, the accompanying drawings in the following description illustrate some embodiments of the present disclosure. Those of ordinary skill in the art may also obtain other drawings based on these accompanying drawings without creative efforts.
FIG. 1 is a schematic diagram of an intelligent terminal according to an embodiment of the present disclosure.
FIG. 2 is a schematic diagram of an example of the intelligent terminal illustrated in FIG. 1.
FIG. 3 is a schematic structural view of the intelligent terminal illustrated in FIG. 1.
FIG. 4 and FIG. 5 are schematic views of a change of a flexible screen in response to information received by the intelligent terminal illustrated in FIG. 3.
FIG. 6 is a schematic view of a change of a flexible screen in response to a plurality of information received by the intelligent terminal illustrated in FIG. 3.
FIG. 7 is a schematic structural view of a flexible screen of the intelligent terminal illustrated in FIG. 3.
FIG. 8 and FIG. 9 are schematic structural views of a screen switching assembly of the intelligent terminal illustrated in FIG. 1.
FIG. 10 is a schematic view of deformable areas on a rear surface of an intelligent terminal according to an embodiment of the present disclosure.
FIG. 11 is a flow chart of a method for controlling an intelligent terminal according to an embodiment of the present disclosure.

### DETAILED DESCRIPTION OF ILLUSTRATED EMBODIMENTS

Technical solutions in embodiments of the present disclosure will be described clearly and completely hereinafter with reference to the accompanying drawings in the embodiments of the present disclosure.

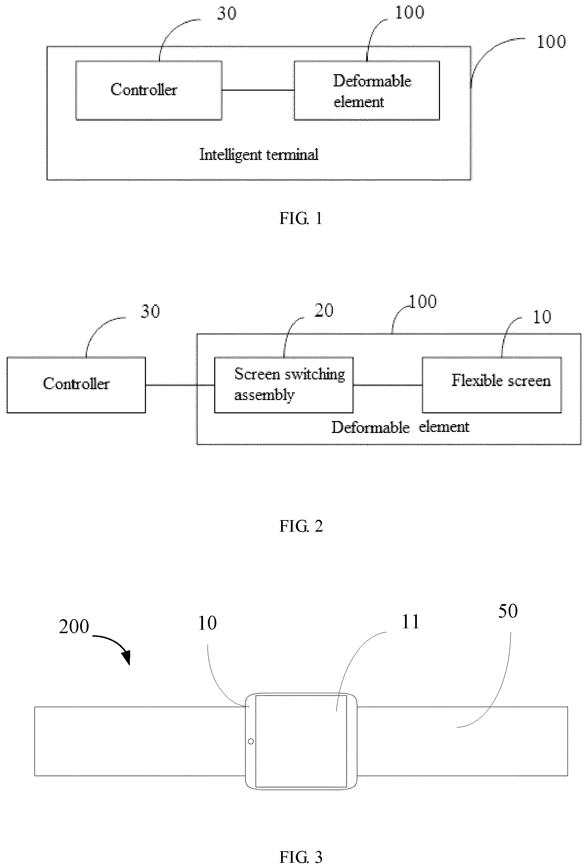

Referring to FIG. 1, an intelligent terminal 200 is provided. The intelligent terminal 200 includes a deformable element 100 capable of deforming and a controller 30. The controller 30 is configured to control the deformable element 100 to deform for prompting in response to information received by the intelligent terminal 200.

In a first embodiment of the disclosure, the controller 30 is configured to control a deformation degree of the deformable element 100 according to the number of the information received. In an implementation, the controller 30 is configured to proportionately increase the deformation degree of the deformable element 100 according to the number of the information received. In a second embodiment of the disclosure, the deformable element 100 may include a plurality of deformable components, and the controller 30 is configured to proportionately increase the number of deformable components to-be-deformed according to the number of the information received.

In a third embodiment of the disclosure, the controller 30 is configured to control the deformable element 100 to regularly deform according to the information received. In an implementation, the controller 30 is configured to control a deformation speed of the deformable element 100 according to an emergency degree of the information received.

In a fourth embodiment of the disclosure, the controller 30 is configured to control a deformation degree of the deformable element 100 according to the number of information that has been processed. In an implementation, the controller 30 is configured to control the deformable element 100 to proportionately recover original shape from the deformation according to the number of the information that has been processed.

The deformable element 100 includes a flexible screen and a screen switching assembly, and the controller 30 is configured to control retracting or expanding of the flexible screen according to the information received. The intelligent terminal may be configured as a smart watch worn on a wrist, and the flexible screen is controlled to expand in a direction perpendicular to the wrist. The controller 30 is configured to control an expanding size of the flexible screen according to the number of the information received.

As an implementation, the controller 30 is configured to control regular deformation of the flexible screen according to the information received. The information includes real-time prompting information and preset prompting information, and the flexible screen has a deformation speed in response to receiving the real-time prompting information by the controller 30, greater than that in response to receiving the preset prompting information by the controller 30. More details are illustrated below in conjunction with embodiments of the disclosure.

Referring to FIG. 2 and FIG. 3, an embodiment of the present disclosure provides an intelligent terminal 200, which includes a controller 30 and a deformable element 100. The deformable element 100 includes a screen switching assembly 20 and a flexible screen 10. The controller 30 is configured to control deformation of the flexible screen 10 with the screen switching assembly 20 in response to information received by the intelligent terminal 200, so as to realize a prompting function for the information received by the intelligent terminal 200. The following describes a smart watch as an example of the intelligent terminal 200, and the smart watch also includes a watch band 50 on which the flexible screen 10 is mounted. It is to be noted that other types of intelligent terminals can also be applied to the present disclosure, such as mobile phones, tablets, smart belts, and the like.

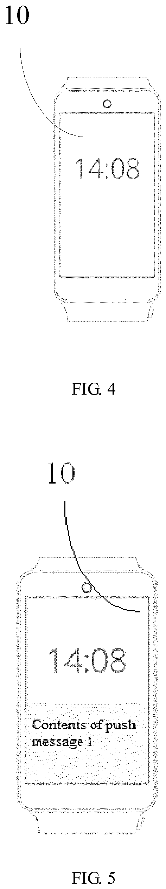

In this embodiment, the information received by the intelligent terminal 200 refers to a push message, such as a short message, a WeChat message, or an incoming call reminder, which are received by the smart watch and displayed on the flexible screen 10. The controller 30 is configured to control a deformation degree of the flexible screen 10 according to the number of the information received. As illustrated in FIG. 4 and FIG. 5, when there is a new push message, the flexible screen 10 of the smart watch may be expanded to a certain size, and therefore a user can intuitively obtain the new push message. Moreover, an expanding size of the flexible screen 10 increases as the number of the push messages unread by the user increase, the user can intuitively obtain that the number of messages to be processed increase by perceiving a change of the shape of the watch via vision or tactility, therefore achieving prompting.

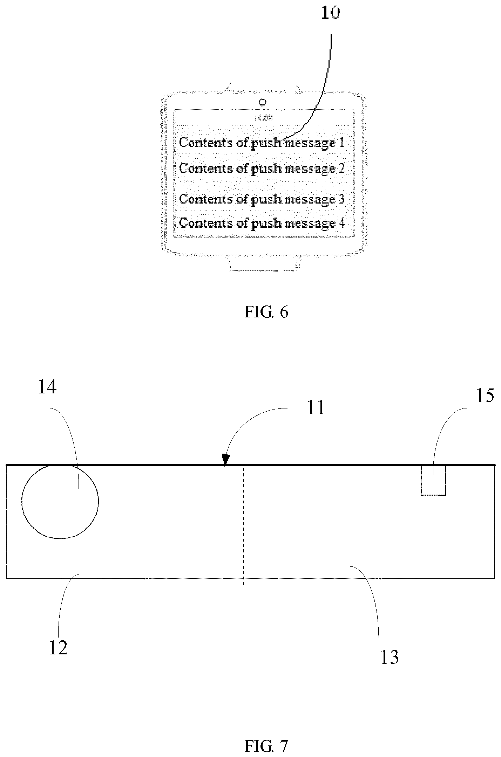

As illustrated in FIG. 6, the controller 30 is configured to proportionately increase the deformation degree of the flexible screen 10 according to the number of the information received. That is, the controller 30 is configured to control the expanding size of the flexible screen 10 with the screen switching assembly 20 according to the number of the push messages received. When multiple pieces of information are received, the flexible screen 10 will expand to an entirely expanding status and unprocessed messages will occupy the entire screen of the flexible screen 10, so as to prompt the user that there are multiple pieces of unprocessed information.

In another implementation of the present disclosure, the controller 30 is configured to control the flexible screen 10 to regularly deform according to the information received. Specifically, the information received by the intelligent terminal 200 may be real-time information, and the real-time information herein refers to messages that are urgently needed to be processed in time, such as an incoming call of a mobile phone, a battery power shortage prompting, or the like.

As an implementation, the controller 30 is configured to control regular expanding and retracting of the flexible screen 10 with the screen switching assembly 20 according to real-time information received. That is to say, instead of conventional vibration prompting, the flexible screen 10 expanding or retracting in a certain rhythm can achieve the purpose of prompting the user and can further facilitate the user to watch.

As an implementation, the controller 30 is configured to control a deformation speed of the flexible screen 10 according to an emergency degree of the information received. Specifically, the controller 30 is configured to control regular deformation of the flexible screen 10 with the screen switching assembly 20, where the deformation speed of the flexible screen 10 is changed according to type of the real-time information. For example, if a screen displays an incoming call, in general, the user needs to answer in time, or needs to hang up if the user is inconvenient, and then the deformation speed of the flexible screen 10 driven by the screen switching assembly 20 can be increased, such that the user can perceive there is an incoming call and can process the incoming call to control a status of the smart watch in time. As for a prompting for battery power shortage, the deforming of the flexible screen 10 can be conducted in a slower speed.

According to the smart watch of the disclosure, a more gentle feedback prompting may be provided to the user with a rhythmic deformation of flexible screen 10 rather than the traditional vibration mode, and an urgency degree of the current prompting can also be known through the deformation speed.

In the third embodiment of the present disclosure, the information received by the intelligent terminal may be preset prompting information, and the preset prompting information may be an alarm prompting, a notepad prompting, an important event prompting, or the like.

In the fourth embodiment of the present disclosure, the controller 30 is configured to control a deformation degree of the flexible screen 10 according to the number of information that has been processed. Furthermore, the flexible screen 10 is controlled to proportionately recover original shape from the deformation. The controller 30 is configured to determine whether the information received is in a processed status. When all of the information is in an unprocessed status, the controller 30 is configured to control the screen switching assembly 20 to entirely expand the flexible screen 10. In contrary, when all the information is in a processed status, the controller 30 is configured to control the screen switching assembly 20 to entirely retract the flexible screen 10. Furthermore, the controller 30 is further configured to control the flexible screen 10 to gradually retract according to the number of the information that has been processed, that is, more information processed results in more parts of the flexible screen retracted, and the flexible screen 10 is not entirely retracted until all information has been processed.

Referring to FIG. 7, the flexible screen 10 includes a flexible screen body 11, a first half casing 12, and a second half casing 13. The first half casing 12 and the second half casing 13 form a casing of the flexible screen 10. In addition, the casing also includes a controller and a battery received in the casing. The first half casing 12 is provided with a spool 14, the second half casing 13 is provided with a locking element 15, and the flexible screen body 11 has an end wound on the spool 14 and has another end fixed to the locking element 15.

In this embodiment, the first half casing 12 can be separated from the second half casing 13. When the first half casing 12 and the second half casing 13 are moved away from each other, the flexible screen body 11 is unwound from the spool 14 to be expanded. On the other hand, when the first half casing 12 and the second half casing 13 are moved toward each other, an unwound part of the flexible screen body 11 is rewound on the spool 14 to be in a retracted status. It is to be noted that in this embodiment, a process of the retracting or expanding of the flexible screen body 11 refers to a process of winding or unwinding of the flexible screen body 11.

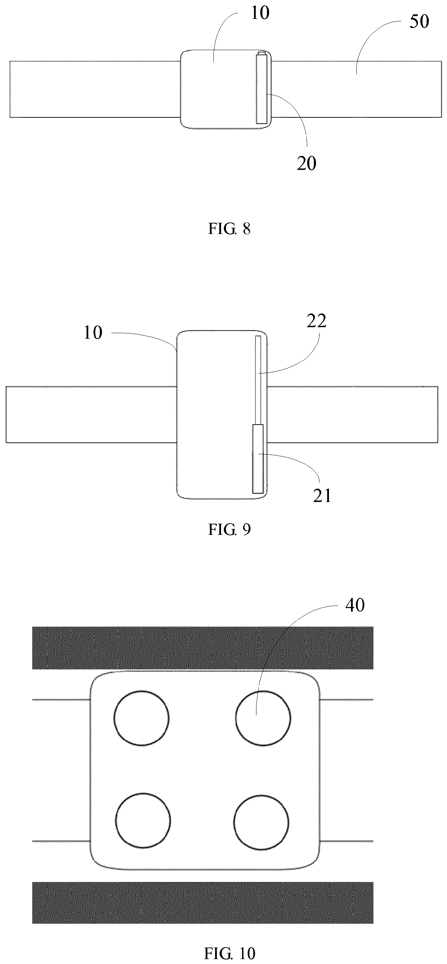

Referring to FIG. 8 and FIG. 9, the screen switching assembly 20 may include a motor 21 and a rod 22. The motor 21 is fixed with the first half casing 12, the rod 22 has a tail end fixed with the second half casing 13, and the motor 21 is configured to telescope to drive the rod 22 to adjust a distance between the first half casing 12 and the second half casing 13. In other embodiments, the screen switching assembly 20 may be a cylinder. When the screen switching assembly 20 is controlled to expand or retract the flexible screen 10, the motor 21 drives the rod 22 to push the second half casing 13 to move away from the first half casing 12, thereby expanding the flexible screen body 11; alternatively, the motor 21 drives the rod 22 to pull the second half casing 13 to move toward the first half casing 12, thereby retracting the flexible screen body 11.

As an implementation, the flexible screen 10 may be expanded or retracted in a horizontal direction and/or a vertical direction. In some embodiments of the present disclosure, the screen switching assembly 20 is controlled to control the retracting or expanding of the flexible screen 10 in a horizontal direction, for example. If the flexible screen 10 can be horizontally and vertically retracted or expanded, two adjacent sides of the flexible screen 10 need to be respectively wound to two spools disposed vertically with each other and respectively be controlled by motors with rods.

Referring to FIG. 10, the intelligent terminal 200 further includes a casing and a plurality of convex deformable areas 40 disposed on a rear surface of the casing of the intelligent terminal 200. The controller 30 is configured to control the deformable areas to generate deformation for prompting according to the information received. It should be understood that the casing may be a combination of the first half casing 12 and the second half casing 13, or may be an additional casing for carrying the flexible screen 10.

Each of the deformable areas 40 can be controlled independently or can be controlled simultaneously. In this embodiment, the deformable areas 40 are protrusions capable of projecting and contracting in directions perpendicular to the flexible screen 10. The deformable areas 40 are approximately flush with the rear surface of the casing when being not deformed, and protrude from the rear surface of the casing when being deformed. Since the rear surface of the casing of the watch is configure to contact with the wrist of the user, when the deformable areas 40 are protruded from the rear surface, they can be intuitively perceived by the skin of the user, thereby realizing the information prompting function.

The controller 30 is configured to control deformation of the corresponding number of the deformable areas 40 according to the number of information received. In general, more information received results in more deformable areas 40 protruded, and therefore the user can know that multiple pieces of information is received through tactility of skin.

Furthermore, the deformable areas 40 may be made from electrostriction material or memory metals, and will deform after being energized. It is noted that, the deformable areas 40 in the disclosure can also be replaced with movable mechanical structure, such as a piston structure or a push rod.

It is to be understood that the deformable areas 40 of this embodiment are not limited to the smart watch with the flexible screen 10 and the screen switching assembly 20. For a smart watch without a flexible screen or a screen switching assembly (i.e., the size of the screen is not variable) and even an intelligent wrist strap, an intelligent head strap, an intelligent waistband, and the like, the deformable areas 40 can also be available.

The intelligent terminal of the present disclosure controls the flexible screen 10 to retract or expand with the screen switching assemble 20 through the controller 30, according to information received by the system, which is more intuitive and materialized. The intelligent terminal of the present disclosure provides an instant prompting of "movement" instead of "vibration", such that the user can perceive the screen size of the watch via vision or tactility at any time, to intuitively obtain the number of unread information.

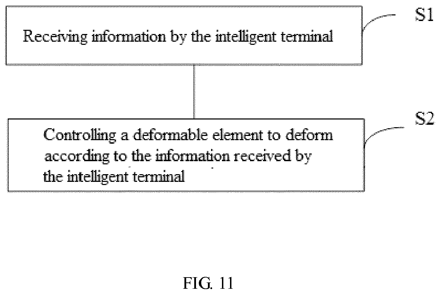

Referring to FIG. 11, a method for controlling an intelligent terminal is further provided. The method begins at S1.

At S1, information is received by the intelligent terminal. As an implementation, the information received by the intelligent terminal includes a push message, real-time information, or preset prompting information.

At S2, a deformable element of the intelligent terminal is controlled to deform according to information received by the intelligent terminal.

The deformable element may be controlled to deform as follows.

A deformation degree of the deformable element of the intelligent terminal may be controlled according to the number of the information received by the intelligent terminal.

The flexible screen of the intelligent terminal may be controlled to retract or expand according to the information received by the intelligent terminal.

An expanding size of the flexible screen of the intelligent terminal may be controlled according to the number of the information received by the intelligent terminal.

The flexible screen of the intelligent terminal may be controlled to regularly deform according to the information received by the intelligent terminal.

A deformation speed of the flexible screen of the intelligent terminal may be controlled according to an emergency degree of the information received by the intelligent terminal.

The method further includes the following. The number of information that has been processed may be determined. The flexible screen may be controlled to retract in proportion according to the number of information that has been processed.

With aid of the method of the present disclosure, when new push messages come up with, the flexible screen of the intelligent terminal will expand or retract, such that a prompting function can be realized and a greater screen can be provided for watching, thereby making the process using the intelligent terminal more intelligent.

While the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. An intelligent terminal, comprising:
a deformable element capable of deforming; and
a controller, and the controller being configured to control the deformable element to deform for prompting in response to information received by the intelligent terminal.

2. The intelligent terminal of claim 1, wherein the controller is configured to control a deformation degree of the deformable element according to the number of the information received.

3. The intelligent terminal of claim 2, wherein the controller is configured to proportionately increase the deformation degree of the deformable element according to the number of the information received.

4. The intelligent terminal of claim 1, wherein the deformable element comprises a plurality of deformable components, the controller is configured to proportionately increase the number of deformable components to-be-deformed according to the number of the information received.

5. The intelligent terminal of claim 1, wherein the controller is configured to control the deformable element to regularly deform according to the information received.

6. The intelligent terminal of claim 5, wherein the controller is configured to control a deformation speed of the deformable element according to an emergency degree of the information received.

7. The intelligent terminal of claim 1, wherein the controller is configured to control a deformation degree of the deformable element according to the number of information that has been processed.

8. The intelligent terminal of claim 7, wherein the controller is configured to control the deformable element to proportionately recover original shape from the deformation according to the number of the information that has been processed.

9. The intelligent terminal of any of claims 1 to 8, wherein the deformable element comprises a flexible screen and a screen switching assembly, and the controller is configured to control the flexible screen to retract or expand according to the information received.

10. The intelligent terminal of claim 9, wherein the controller is configured to control the flexible screen to regularly retract and expand according to the information received.

11. The intelligent terminal of claim 10, wherein the information comprises real-time prompting information and preset prompting information, and a deformation speed of the flexible screen when the controller receives the real-time prompting information, is greater than that when the controller receives the preset prompting information.

12. The intelligent terminal of claim 9, wherein the controller is configured to control an expanding size of the flexible screen according to the number of the information received.

13. The intelligent terminal of claim 9, wherein the intelligent terminal is configured as a smart watch worn on a wrist and the flexible screen is controlled to expand in a direction perpendicular to the wrist.

14. The intelligent terminal of any of claims 1 to 8, wherein the deformable element comprises a plurality of convex deformable areas configured to be in contact with a human body, and the controller is configured to control the deformable areas to generate deformation for prompting according to the information received.

15. A method for controlling an intelligent terminal, comprising:
receiving information by the intelligent terminal; and
controlling a deformable element of the intelligent terminal to deform according to information received by the intelligent terminal.

16. The method of claim 15, wherein the controlling a deformable element of the intelligent terminal to deform according to information received by the intelligent terminal, comprises:
controlling a deformation degree of the deformable element of the intelligent terminal according to the number of the information received by the intelligent terminal.

17. The method of claim 15 or 16, wherein the deformable element comprises a flexible screen and a screen switching assembly, and the controlling a deformable element of the intelligent terminal to deform according to information received by the intelligent terminal, comprises:
controlling the flexible screen of the intelligent terminal to retract or expand according to the information received by the intelligent terminal.

18. The method of claim 17, wherein the controlling the deformable element of the intelligent terminal to deform according to the information received by the intelligent terminal, comprises:
controlling an expanding size of the flexible screen of the intelligent terminal according to the number of the information received by the intelligent terminal.

19. The method of claim 17, wherein the controlling the deformable element of the intelligent terminal to deform according to the information received by the intelligent terminal, comprises:
controlling the flexible screen of the intelligent terminal to regularly retract and expand according to the information received by the intelligent terminal.

20. The method of claim 19, wherein the controlling the deformable element of the intelligent terminal to deform according to the information received by the intelligent terminal, comprises:
controlling a deformation speed of the flexible screen of the intelligent terminal according to an emergency degree of the information received by the intelligent terminal.

21. The method of claim 15, further comprising:
determining the number of information that has been processed; and
controlling the flexible screen to proportionately retract according to the number of information that has been processed.
